Europäisches Patentamt

European Patent Office

Office européen des brevets

(11) Publication number: **0 418 858 A2**

## EUROPEAN PATENT APPLICATION

(21) Application number: 90118021.6

(22) Date of filing: **19.09.90**

(51) Int. Cl.⁵: **G11B 19/24**, G11B 20/12, G11B 21/08, G11B 7/013

(30) Priority: 19.09.89 JP 242607/89

(43) Date of publication of application:
27.03.91 Bulletin 91/13

(84) Designated Contracting States:
DE NL

(71) Applicant: HITACHI, LTD.
6, Kanda Surugadai 4-chome
Chiyoda-ku, Tokyo 101(JP)

(72) Inventor: Yamane, Yuji
8-11, Nishisakawa-1-chome
Odawara-shi(JP)

(74) Representative: Patentanwälte Beetz sen. -
Beetz jun. Timpe - Siegfried -
Schmitt-Fumian- Mayr
Steinsdorfstrasse 10
W-8000 München 22(DE)

(54) Method of recording/reproducing information for rotary-type information recording/reproducing apparatus.

(57) A disk-type recording medium (2a) is employed on which a plurality of tracks ($t_1$ ... $t_n$) are allocated to each of at least two zones (#0 ... #46), each of the tracks ($t_n$....$t_m$) included in the respective zones (#0....#46) is divided into a plurality of sectors (Sector 0... Sector S), and each of the tracks ($t_n$....$t_m$) included in a zone located at the outer peripheral side has a greater number of sectors than each of the tracks ($t_n$....$t_m$) included in a zone located at the inner peripheral side. The disk-type recording medium (2a) is rotated at a constant rotating speed, and a head (26) is moved among zones from outer peripheral side zones to inner peripheral side zones and from inner peripheral side tracks to outer peripheral side tracks in a zone. Information is recorded or reproduced by sequentially selecting the moving direction of the head (26). Further, a mode for sequentially accessing the zones from the outer peripheral side and a mode for sequentially accessing from the inner peripheral side are provided such that then recording/reproducing mode can be switched in accordance with categories of information.

OPERATION AFTER LOADING OPTICAL DISK

F I G. 3A

EP 0 418 858 A2

# METHOD OF RECORDING/REPRODUCING INFORMATION FOR ROTARY-TYPE INFORMATION RECORDING/REPRODUCING APPARATUS

## BACKGROUND OF THE INVENTION

This invention relates to a method of recording/reproducing information for rotary-type information recording/reproducing apparatus, and more particularly to recording/reproducing of information of a rotary-type information recording medium such as a magnetic disk and an optical disk.

In information processing systems, rotary-type information recording/reproducing apparatus such as those using a magnetic disk, an optical disk or the like are known as external storing apparatus for storing a large quantity of information. Such apparatus typically employs a constant angular velocity (CAV) method which makes identical the information recording capacity of each of a plurality of tracks concentrically or spirally positioned on a recording medium irrespective of their position in the radial direction and keeps constant the angular velocity of rotation of the rotary-type information recording medium.

According to the CAV method, the information recording density is higher as a track is positioned nearer to the inner peripheral side. Therefore, it is the innermost track in which an inherent recording density of a medium can be effectively utilized, while other tracks nearer to the outer peripheral side have a large surplus in the recording density.

Meanwhile, attention is given to a so-called Extended Constant Angular Velocity (ECAV) method which provides a larger information recording capacity for tracks on the outer peripheral side than tracks on the inner peripheral side and keeps the angular velocity of rotation of the medium constant, to thereby increase the recording capacity per medium. In the ECAV system, a zone is formed by every predetermined number of tracks radially adjacent to each other, wherein each of tracks belonging to the same zone is adapted to accommodate the same number of data blocks. Further, outer zones (zones nearer to the outer peripheral side) have a number of data blocks (for example, a number of sectors) per track larger than inner zones (zones nearer to the inner peripheral side). Then, recording/reproducing of information is performed by sequentially switching from inner zones to outer zones. The ECAV method is advantageous in that the recording density of the tracks, irrespective of the position on a medium, can be substantially uniformly set to a value proximal to the limit of the recording medium, and tracks nearer to the outer peripheral side have a higher data transfer speed, whereby the utilizing efficiency is improved.

## SUMMARY OF THE INVENTION

When data is written sequentially from the top of a user data recording area in a large capacity rotary-type information recording medium such as an optical disk, it is quite rare that the whole user data recording area in the medium is used up because of the large capacity of the medium. In the above-mentioned ECAV method, the utilizing efficiency is improved by assigning the user data recording area from one of the outermost tracks (for example, using from the area with the highest data transfer speed) so as to leave tracks on the inner peripheral side unused.

Meanwhile, when frequently accessed data, for example search data, and rarely accessed data, for example image data, are mixed like, for example, image data including image and its search information, it is effective to record the frequently accessed data in an area with a higher data transfer speed and the rarely accessed data in an area with a lower data transfer speed. In other words, it is desirable for an optical disk employing the ECAV method to record/reproduce data requiring a high speed access from a relatively outer peripheral area to an inner peripheral area and data which does not require such high speed from a relatively inner peripheral area to an outer peripheral area, making it possible to record/reproduce the above two kinds of data on a single optical disk.

As described above, a recording method is determined which of the utilizing efficiency and the data transfer speed is considered more important, and accordingly it is difficult to make a good use of the characteristics of the both methods.

It is a first object of the present invention to provide a method of recording/reproducing information for rotary-type information recording/reproducing apparatus which is capable of increasing the data transfer speed and improving the utilizing efficiency at the same time.

It is a second object of the present invention to provide a method of recording/reproducing information for rotary-type information recording/reproducing apparatus which is capable of recording/reproducing information from the outer peripheral side to the inner peripheral side of a rotary-type information recording medium with a high efficiency.

It is a third object of the present invention to provide a method of recording/reproducing information for rotary-type information recording/reproducing apparatus which is capable of recording/reproducing information in different modes without damaging the compatibility of rotary-type information recording media.

To achieve the above objects, the present invention is characterized in the following procedure:

First, a recording area of a rotary-type information recording medium, such as, for example, an optical disk, a magnetic disc or the like, is divided into a plurality of concentric large areas from the inner peripheral side to the outer peripheral side. These divided large areas are each referred to as "a zone". These zones are, for example, 47 zones #0 to #46.

Next, each of the zones is divided into a plurality of concentric intermediate areas each of which is hereinafter called "a track". The track is formed by dividing each of the zones, for example, by 1024.

Next, each of the tracks is divided into small areas which respectively have a predetermined byte length in the rotating direction. This small area is called, for example, "a sector". Tracks in the same zone are assumed to have the same number of sectors. A number of sectors contained in each track of each zone is increased as a zone is positioned nearer to the outer peripheral side. Thus, for example, a track in the innermost zone is formed of 51 sectors, while a track in the outermost zone is formed of 97 sectors. The rotary-type recording medium thus defined is rotated at a predetermined rotating speed to record/reproduce information. A controller for controlling recording/reproducing of information sequentially selects the zones in a direction from the outermost zone to the innermost zone. In a selected zone, information is recorded or reproduced sequentially from the innermost track to the outermost track.

According to the present invention, information can be recorded and reproduced from zones on the outer peripheral side where the data transfer speed is higher upon recording on and reproducing from a rotary-type information recording medium, thereby making it possible to efficiently record/reproduce information.

Further, the tracks are each designated a track address in the ascending order from inside to outside. There are provided a first mode which sets i-th recording zone subsequent to i-l-th zone in the ascending direction of the track addresses and a second mode which sets i-th recording zone subsequent to i-l-th zone in the descending direction of the track addresses, wherein recording as well as reproducing are executable in either mode in response to an external instruction. In the first mode, recording or reproducing is sequentially performed on tracks from the recording zone including the first track, while in the second mode, recording or reproducing is sequentially performed on tracks from the recording zone including the last track.

This operation allows the same rotary-type information recording medium to be suitably used in accordance with the type of data, thereby improving the utilization efficiency of the rotary-type information recording medium.

Furthermore, identification information for identifying the first mode or the second mode is recorded in a portion of the rotary-type information recording medium for use in selecting one of the first mode and the second mode conforming to the rotary-type information recording medium on which information is recorded or reproduced. This operation enables recording/reproducing in different modes without damaging compatibility of the rotary-type information recording medium.

BRIEF DESCRIPTION OF THE DRAWINGS

Figure 1 is an explanatory view showing an embodiment of the present invention which is an example of a data recording format set to a rotary-type information recording medium and an accessing method for rotary-type information recording/reproducing apparatus;

Figures 2A through 2C are explanatory views showing how a recording area of a rotary-type information recording medium is utilized in the present embodiment, in comparison with prior art;

Figures 3A and 3B are flow charts respectively showing an example of the operation of a rotary-type information recording/reproducing apparatus according to a method of recording/reproducing information of the present embodiment;

Figures 4A and 4B are a flow chart also showing an example of the operation of a rotary-type information recording/reproducing apparatus according to the method of recording/reproducing information of the present embodiment.

Figure 5 is an explanatory view schematically showing an example of a data recording format in detail;

Figure 6 is an explanatory view also schematically showing an example of a data recording format in detail;

Figure 7 is a block diagram showing an example of a rotary-type information recording/reproducing apparatus in which the method of recording/reproducing information of the present embodiment is implemented; and

Figure 8 is an explanatory view showing an example of a method of accessing a plurality of tracks in a recording zone.

DESCRIPTION OF THE PREFERRED EMBODIMENTS

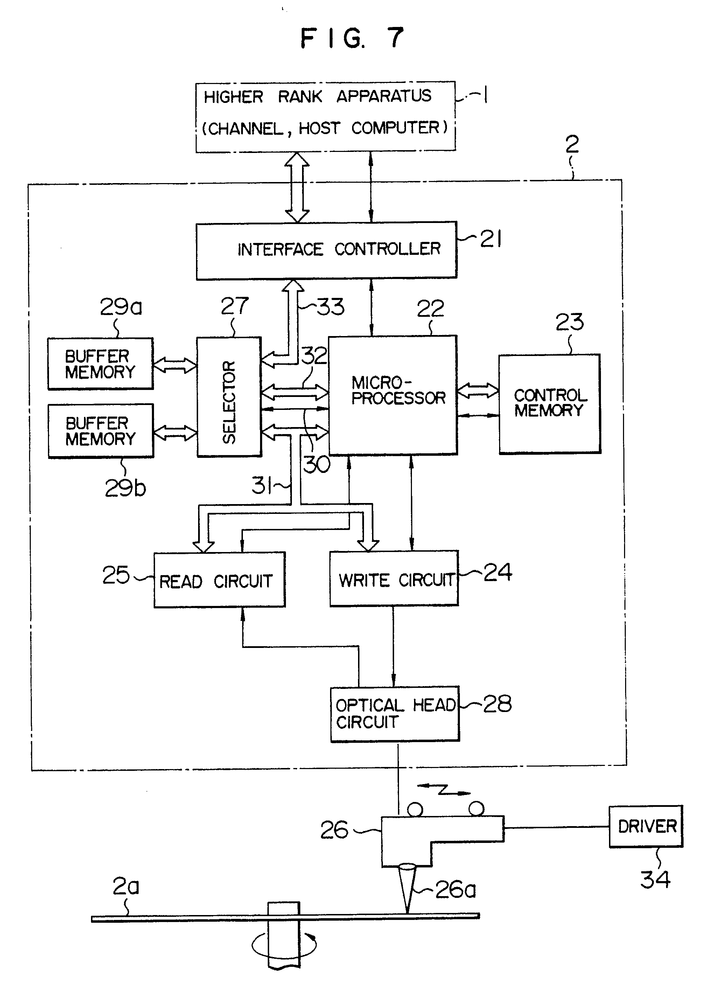

First, a construction of an optical disk drive 2, which is an example of a rotary-type information recording/reproducing apparatus of the present embodiment, will be explained with reference to Figure 7.

The optical disk drive 2 of the present embodiment is made up of an interface controller 21 for controlling reception and transfer of data and commands with a higher rank apparatus 1, for example, a host computer, a microprocessor 22 for controlling the operation of the whole optical disk drive 2 in response to commands and so on from the higher rank apparatus 1, and a control memory 23 for storing microprogram for instructing the microprocessor 22 of executing predetermined control operations and so on. The microprocessor 22 is connected to a write circuit 24, a read circuit 25 and an optical head circuit 28 which in turn are connected to the interface controller 21 through a read/write bus 31, a plurality of buffer memories 29a, 29b, a selector 27, an interface bus 33 and so on. The buffer memories 29a, 29b are connected to the microprocessor 22 through the selector 27 and a processor bus 32. The optical head circuit 28 is connected to an optical head mechanism 26 which records information on and reproduces information from an optical disk 2a which is a kind of rotary-type information recording media. The optical head mechanism 26 is driven by a driver 34 to move along the radial direction of the optical disk 2a for seek and tracking operations.

The write circuit 24 adds an error correcting code (ECC) to incoming information from the higher rank apparatus 1 through the buffer memory 29a or 29b and so on, and thereafter modulates the information with ECC and delivers the modulated information to the optical head circuit 28. The optical head circuit 28 drives a laser provided in the optical head mechanism and controls to record information in an area of a target track on the optical disk 2a in a format later referred to. The read circuit 25 demodulates read-out signals optically read from the optical disk 2a and delivered thereto through the optical head circuit 28, performs a restoration operation which is opposite to the addition of the error correcting code, and delivers the read-out signals thus processed to the buffer memory 29a or 29b. The selector 27 changes over the connection of the buffer memories 29a, 29b with the processor bus 32, the read/write bus 31 or the interface bus 33, in accordance with a microinstruction given from the microprocessor 22. The plurality of buffer memories 29a, 29b have their capacity determined so as to permit write and read operations in respective track units of the recording zone, which will be later referred to.

The optical head mechanism 26, by means of a laser beam 26a or the like, records information on and reproduces information from the optical disk 2a which is rotated at a constant speed. A positioning in a target area in the radial direction of the optical disk 2a, for example a positioning associated with a seek operation, is performed by an appropriate combination of a relatively rough positioning by movement of the whole optical head mechanism 26 and a precise positioning by fine movement of the optical axis of the laser beam 26a.

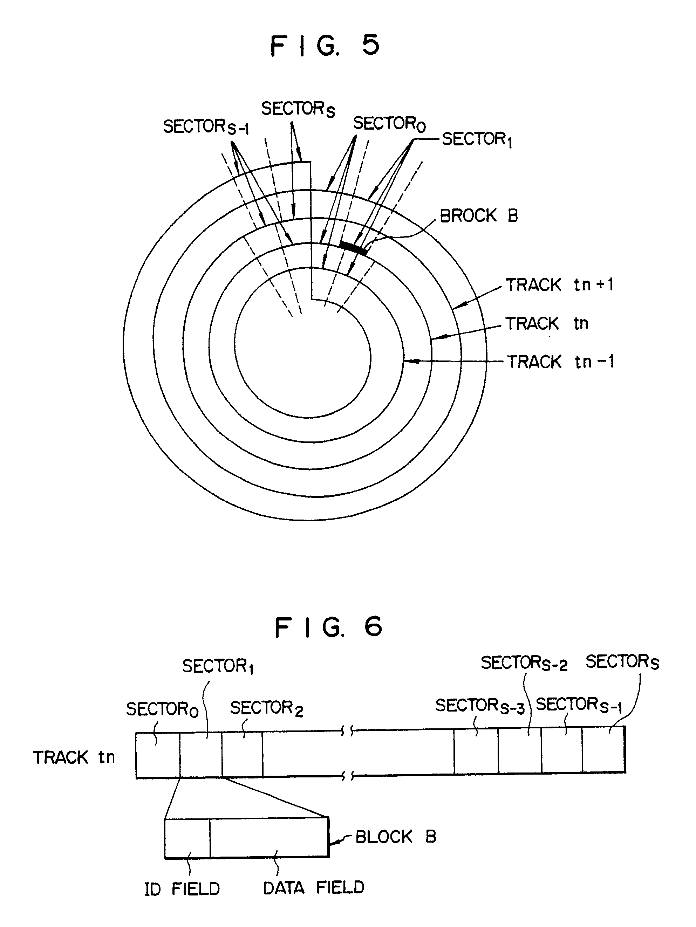

Now, a recording area of the optical disk 2a will be explained with reference to Figure 5. The optical disk 2a comprises a plurality of tracks $t_n$ each formed by partitioning a spirally formed recording area by one rotation portion. Each track is designated a track number which is increased from the inner peripheral side to the outer peripheral side, such as track $t_0$, track $t_1$, ..., track $t_{n-1}$, track $t_n$, track $t_{n+1}$, .... The optical disk 2a comprises $m+1$ of tracks from track $t_0$ to track $t_m$, wherein peripherally adjacent plural tracks form 47 recording zones each comprising 1024 tracks.

Further, each track $t_n$ is partitioned into a plurality of sectors each having an identical recording capacity. The sectors are each designated a sector number such as sector 0, sector 1, ..., sector S-1, and sector S. Each of the tracks belonging to the same recording zone has an identical number of sectors. With respect to the recording zone, a number of sectors included in each of the tracks belonging to the respective recording zones is gradually increased from the inner peripheral side to the outer peripheral side.

An area (for example, a sector) unequivocally specified by a track address and a sector address inside the optical disk 2a is managed by the concept of a block B. The block B is a unit for writing on and reading from the optical disk 2a from the higher rank apparatus 1. The block B may comprise one sector portion or a plural sector portion, dependent on the higher rank apparatus 1. The present embodiment shows an example in which the block B unit corresponds to one sector.

Each sector is formed, as shown in Figure 6, of an ID field indicative of a physical storing position in the optical disk 2a, for example, a track address and a sector address, and a data field in which user data is recorded with associated error restoring information, error correcting information and so on. Each sector comprises, for example, 1024 bytes length of user data.

In the present embodiment, each of 1024 tracks $t_0$ - $t_{1023}$ belonging to the innermost recording zone includes 51 sectors $sector_0$ - $sector_{50}$. As the position of a recording zone is outwardly moved by one recording zone, the number of sectors included in the track is increased by one. Each of the plural tracks belonging to the outermost recording zone includes 97 sectors sector $_0$ - sector$_{96}$. Thus, the total recording capacity of each track in each of the recording zones is gradually increased from the inner side to the outer side of the optical disk 2a, and also the data transfer speed upon recording/reproducing is higher as the recording zone is located nearer to the outer peripheral side, since the rotational speed (angular velocity) of the optical disk 2a is constant. Therefore, the write circuit 24 and the read circuit 25 are changed over to have operating characteristics in accordance with a data transfer speed of the respective recording zones.

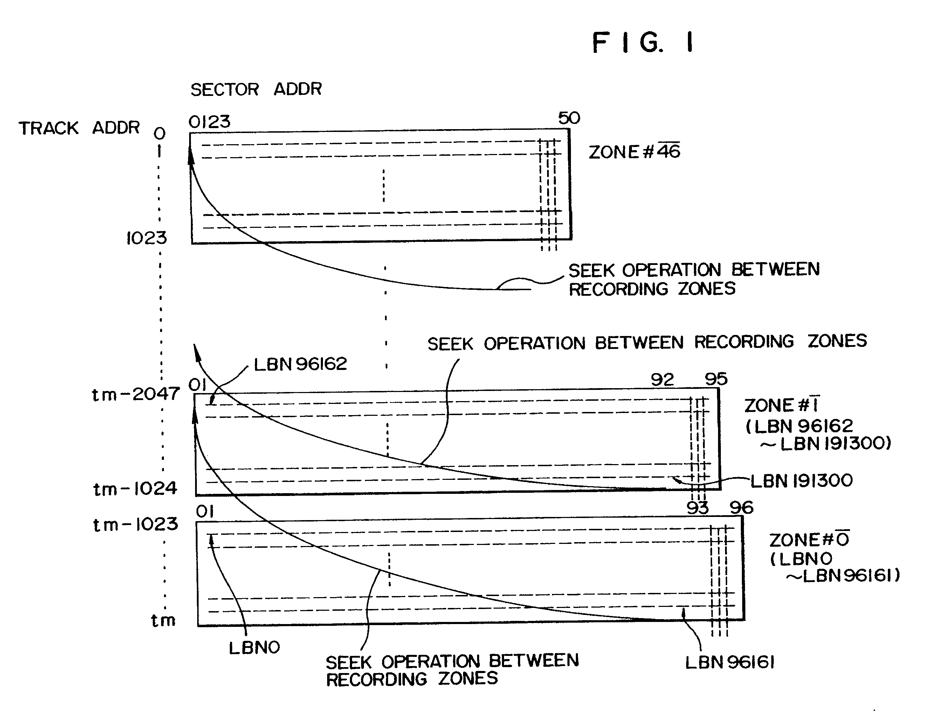

In the present embodiment, zone numbers # $\overline{0}$ - # $\overline{46}$ are given to the plural recording zones from the outermost one. Information recording/reproducing is effected from outer one to inner one in the respective recording zones but from the inner peripheral side to the outer peripheral side in the respective plural tracks belonging to each recording zone. A recording/reproducing instruction from the higher rank apparatus 1 is performed by a logical block number LBN corresponding to each block B. In the present embodiment, a logical block number LBN0 is assigned to the first sector of the innermost track $t_{m-1023}$ of the plural tracks belonging to the outermost recording zone # $\overline{0}$ , and subsequently, a sector address and a track address are sequentially assigned in the ascending order in corresponding recording zone. This example is shown in Figure 1. In the recording zone # $\overline{0}$ , LBN0 -LBN96161 are assigned, while in the recording zone # $\overline{1}$ , positioned internally adjacent thereto, LBN96162 -LBN191300 are assigned, and the assignment of the block B in the subsequent recording zones # $\overline{2}$ - # $\overline{46}$ is performed in the same manner as the above. It should be noted, however, that the last three sectors of the plural sectors included in each track are used as a spare area in case a write error occurs in other sectors belonging to the same track, so that ordinary user data is not recorded therein. Also, the last track of the plural tracks belonging to each recording zone is used to provide a margin time necessary to change over the operating characteristics of the write circuit 24 and the read circuit 25 for moving to the next recording zone where the data transfer speed is different, so that actual data is not recorded therein. Such margin time is necessary because the reliability of the actual optical disk on data writing is not so high at present, so that it is occasionally necessary to perform a verification which is achieved by reading out immediately after writing data (hereinafter simply called "the RAW (Read After Write) operation") and provide a spare area for a data block in which a write failure has occurred. Thus, an optical head positioning control including a positioning to the spare area is very important.

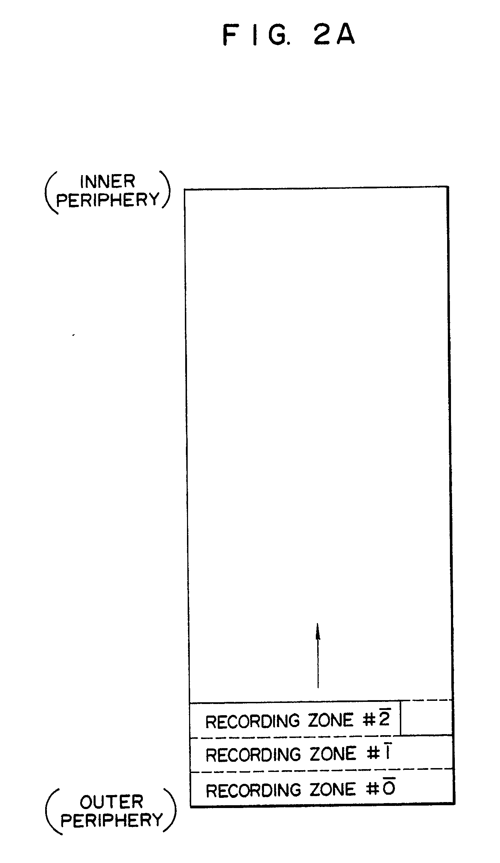

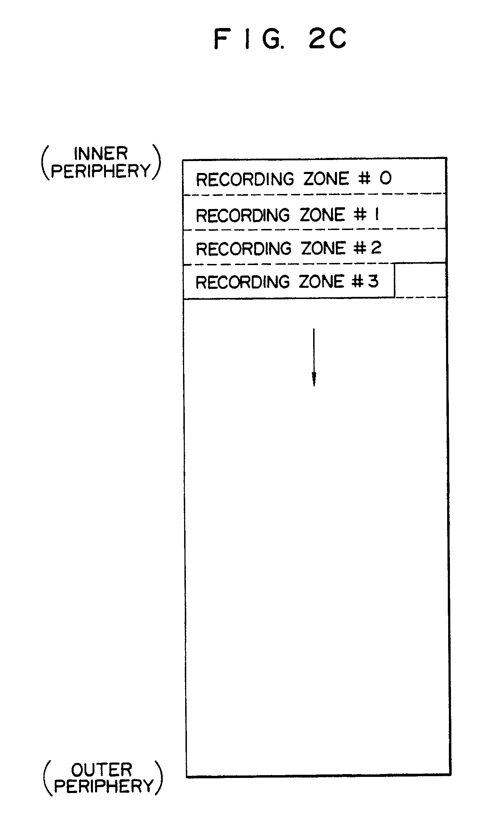

Figure 2A conceptually shows how to utilize the recording area of the optical disk 2a of the present embodiment. Since the recording zone on the outer peripheral side having a larger data transfer speed is first used, the recording zone on the inner peripheral side where the data transfer speed is relatively low remains unused, whereby the utilizing efficiency of the optical disk is improved in comparison with the conventional operation, as shown in Figure 2C, which simply sets the recording zones #0, #1, #2, .... from the innermost area in the ascending order of the track addresses and uses the recording zones in this order.

It is also possible according to the present embodiment to set in the single optical disk 2a the above-mentioned mode which uses the plural recording zones from the outer peripheral side to the inner peripheral side and the conventional operating mode which records data in the recording zones from the inner peripheral side to the outer peripheral side. In this case, identification information for identifying one of the two modes is recorded in a portion of the information recording area of the optical disk 2a. It is preferable in this instant to additionally record information indicating in which blocks the recording zones are used from the outer peripheral side and in which blocks the recording zones are used from the inner peripheral side.

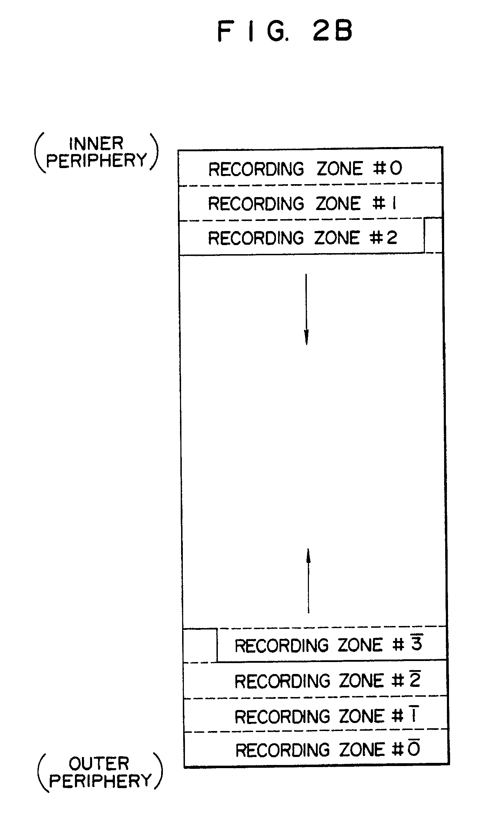

In the explanation herebelow, the mode shown in Figure 2A is called "the backward mode (second mode)", the mode shown in Figure 2B "the combined mode", and the conventional mode shown in Figure 2C "the forward mode (first mode)".

In the combined mode as shown in Figure 2B, the recording zones #0, #1, #2, .... are set from the inner peripheral side to the outer peripheral side for ordinary data such as images and documents which do not require a high data transfer speed. On the other hand, for managing information such as a directory used to manage data recorded on the optical disk 2a such as images and documents and requiring a relatively high data transfer speed, the recording zones # $\overline{0}$ , # $\overline{1}$ , # $\overline{2}$ , .... are set from the outer peripheral side to the inner peripheral side. Thus, the recording area of the optical disk 2a is properly used in accordance with characteristics of recorded data.

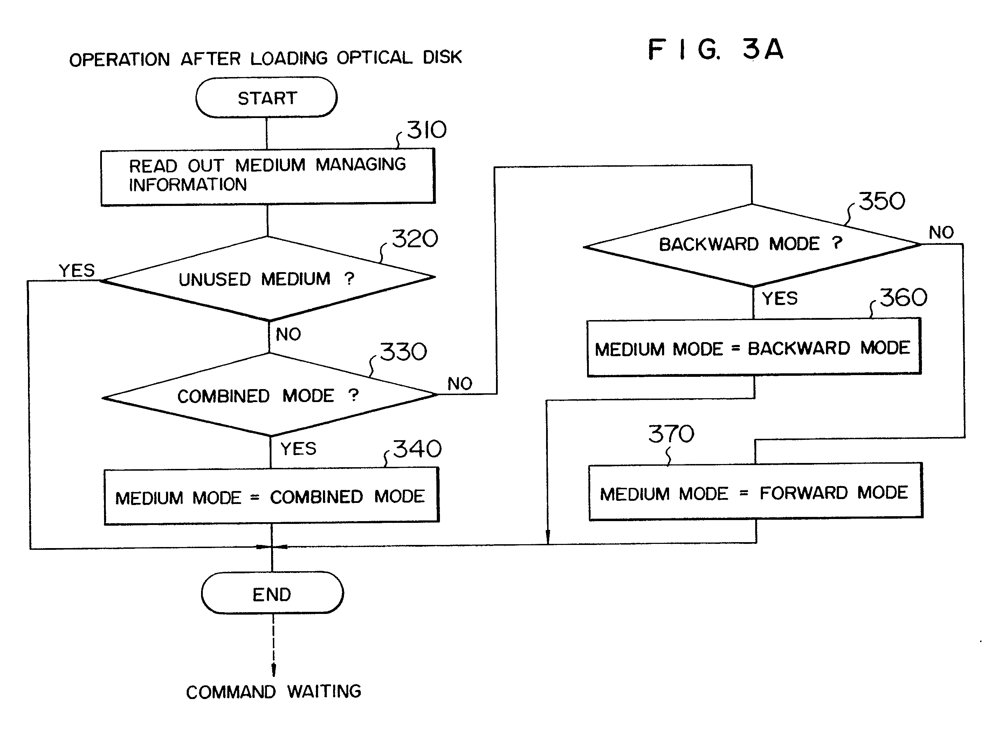

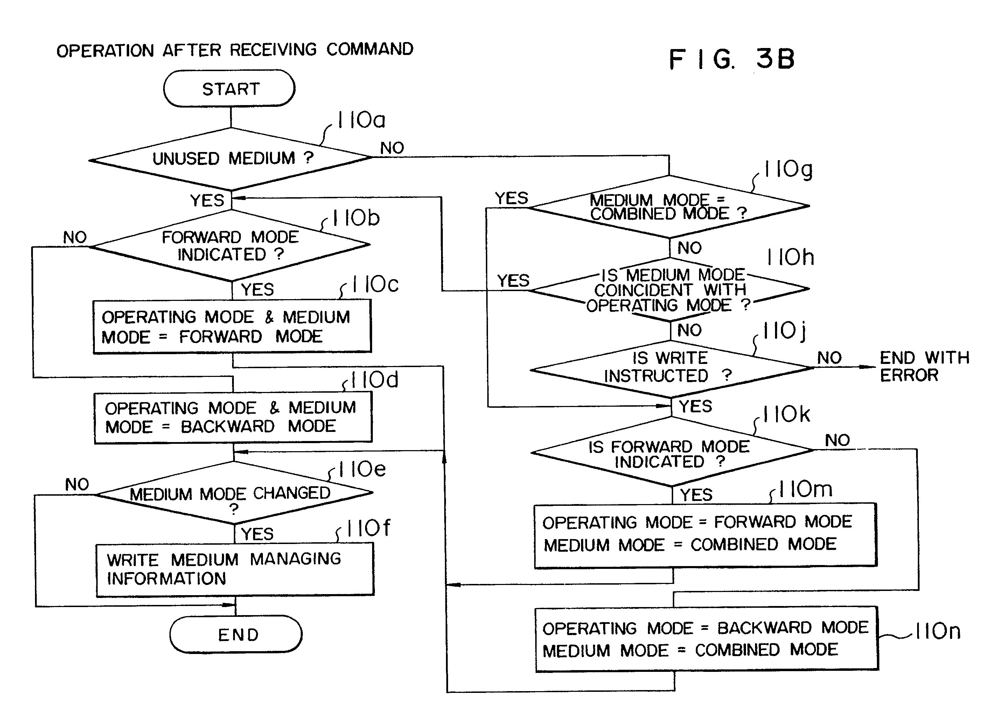

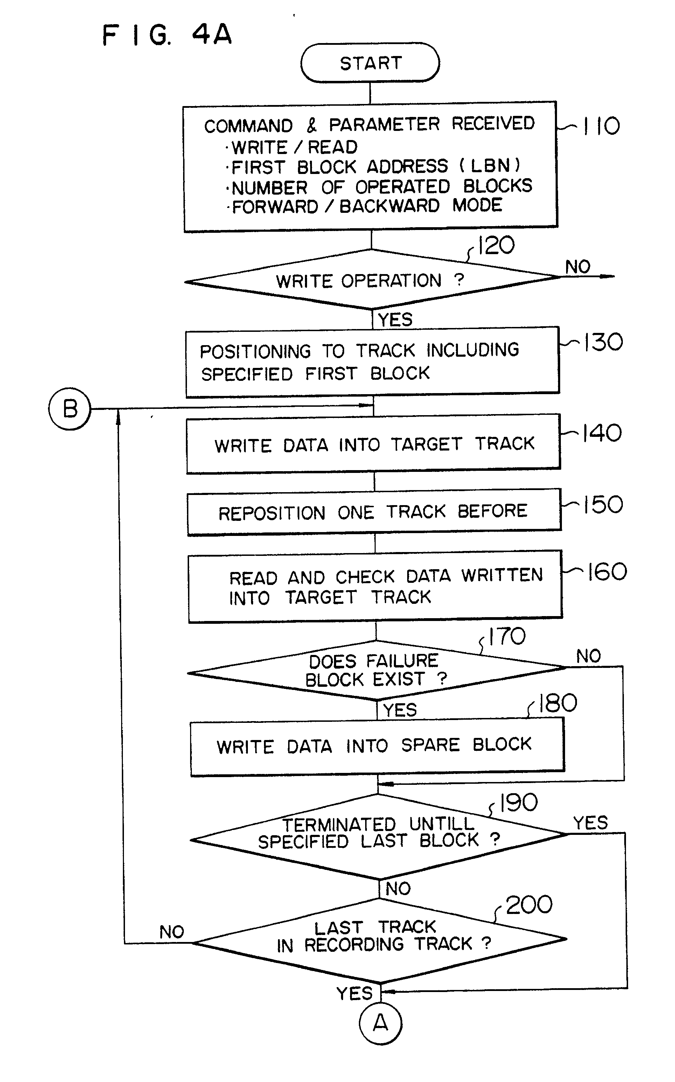

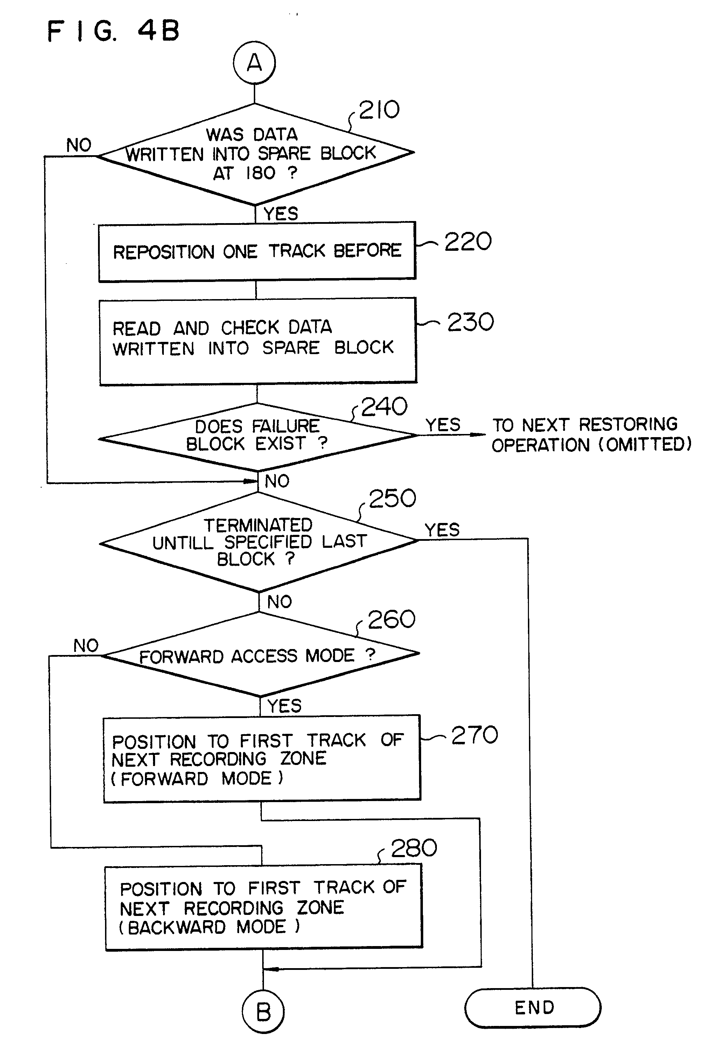

Next, an example of the operation of the information recording/reproducing method for rotary-type information recording/reproducing apparatus of the present embodiment will be explained with reference to Figures 3A, 3B and a flowchart shown in Figures 4A and 4B.

First, when the optical disk 2a is loaded into the optical disk drive 2 as shown in Figure 3A, the identification information recorded in the optical disk 2a is read out (step 310).

It is next determined whether or not the identification information has already been recorded, that is, whether or not the optical disk 2a is unused (step 320). If it is determined at the step 320 that the identification information has already been recorded, it is further determined whether the optical disk 2a is set in the combined mode or one of the forward and backward access modes (step 330). If it is determined that the disk 2a is set in the combined mode, the combined mode is registered in a portion, not shown, of the control memory 23 of the optical disk drive 2 as medium mode information (step 340). If the optical disk 2a is not in the combined mode, it is determined whether it is in the backward mode or not (step 350). If the answer to the step 350 is Yes, the backward mode is registered as the medium mode information (step 360). On the other hand, if it is determined at the step 350 that the optical disk 2a is not set in the backward mode (therefore, it is set in the forward mode), the forward mode is registered as the medium mode information (step 370).

If the operation immediately after loading the optical disk 2a is completed, the optical disk drive 2 is in a ready state, waiting for a command from the higher rank apparatus 1.

Next, a procedure of recording/reproducing operations of the rotary-type information recording/reproducing apparatus according to the present embodiment will be explained with reference to Figures 4A and 4B.

If the interface controller 21 receives a command issued from the higher rank apparatus 1 and parameters associated therewith (step 110), an operating mode is selected. The parameters associated with each command includes information indicative of a write or read operation, the logical block number (LBN) of the first block to be processed, a number of blocks, a mode indication indicative of the forward mode, the backward mode or the combined mode.

Now, the operating mode selection will be explained in detail with reference to Figure 3B. First, it is determined whether or not the optical disk 2a presently loaded is unused by examining whether the medium mode information is set in the control memory 23 (step 110a). If it is determined that the optical disk 2a is unused, it is examined whether or not the mode indication indicates the forward mode (step 110b). If the forward mode is indicated, the forward mode is set as the operating mode and the medium mode (step 110c). Otherwise, the backward mode is set as the operating mode and the medium mode (step 110d). If the operating mode is not particularly indicated from the higher rank apparatus 1, the backward mode is selected as the operating mode and the medium mode.

If it is determined at the step 110a that the optical disk 2a has been already used, it is examined whether or not the medium mode thereof is the combined mode (step 110g). If it is not the combined mode, it is examined whether or not the medium mode and the operating mode are coincident with each other (step 110h). If they are coincident, the procedure jumps back to the step 110b.

If it is detected at the step 110h that the medium mode and the operating modes are not coincident, it is further examined whether or not a command instructs a write operation (step 110j). If it is detected that the command instructs a read, the already written data mode is different from the mode at the time reading, so that the procedure is terminated as a failure operating mode after generating an error indication.

If a write instruction is detected at the step 110j, it is further examined whether or not the command has a forward operating mode indication (step 110k). If the forward operating mode is indicated, the operating mode is set to the forward mode, and the medium mode to the combined mode (step 110m). On the other hand, if it does not have a forward operating mode indication, the operating mode is set to the backward mode, and the medium mode to the combined mode (step 110n), followed by jumping to the step 110e.

After the operating mode and the medium access mode have been respectively set by the above steps 110a to 110n, it is examined whether or not the medium mode has been changed (step 110e). If it has been changed, this is written into a predetermined recording area of the optical disk 2a as identification information (step 110f).

If it is detected at the step 110e that there was no change, the step 110f is skipped.

Turning back to Figure 4, after the step 110, it is determined whether or not a write operation is to be performed (step 120). If the answer to the step 120 is Yes, a specified recording zone including the first block and the track position in the recording zone are calculated in accordance with the forward mode or the backward mode, and the optical head mechanism 26 is positioned to emit the laser beam 26a to a target track in the recording zone (step 130). Incidentally, a read operation is substantially equivalent to the write operation, later referred to, except that the RAW operation is not necessary, the data transfer direction is opposite, and so on, so that illustration and explanation of the read operation will be omitted.

Next, data is written into the target track (step 140), the optical head mechanism 26 is repositioned to the track which is located one track inside the target track so as to perform the RAW operation to the target track (step 150), and then a verifying operation is executed by reading out data which has been written into the target track (step 160).

Then, it is examined whether or not there is a write failure block B in the track (step 170). If such write failure block B is detected in the track, the corresponding data is written into a spare block B positioned at the end of the same track (step 180). If it is determined that there is no failure block, the step 180 is jumped to execute the procedure from the step 190.

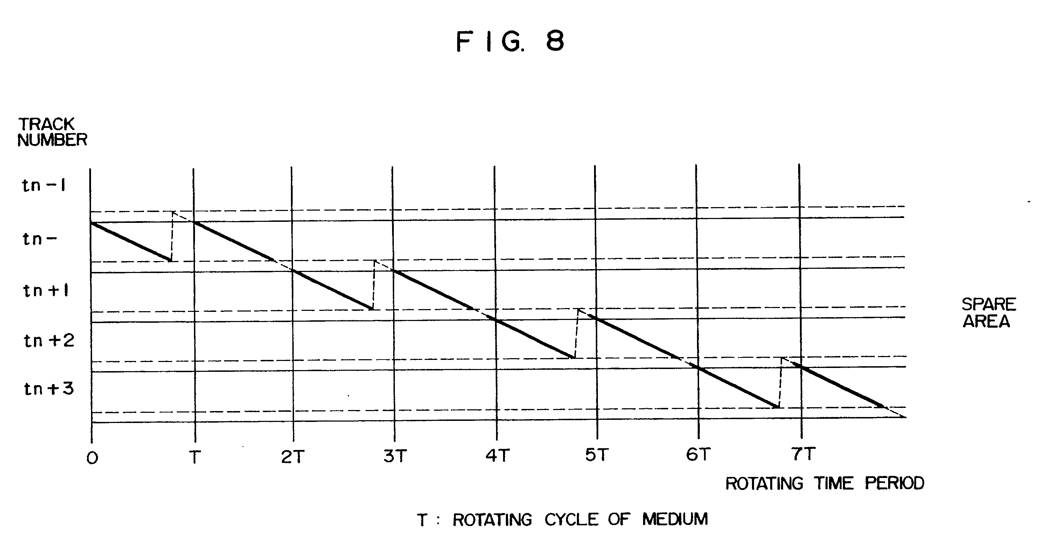

Next, an example of the data write operation and the subsequent RAW operation executed by the steps 130 - 180 will be explained in more detail with reference to Figure 8.

In Figure 8, the ordinate represents the track number $t_n$, $t_{n+1}$, ..., while the abscissa represents the time in a rotating cycle T of the optical disk 2a. It is assumed that the last three sectors of each track are assigned to a space area.

First, data is written into a track $t_n$ from the first sector to the last sector except for the spare area. This write operation is expressed by a solid diagonal line in Figure 8. Next, the optical head mechanism 26 is positioned to a track $t_{n-1}$ which is located one track before the track $T_n$. This is expressed by a broken diagonal line in Figure 8. Then, a rotational delay time intervenes until the first sector of the track $t_n$ comes again to the position of the optical head mechanism 26. Subsequently, the RAW operation is performed from the first sector to the last sector except for the spare area. Again, a rotational delay time intervenes until the first sector of the next track $t_{n+1}$ comes to the position of the optical head mechanism 26. Subsequently, data is written into a track $t_{n+1}$ from the first sector to the last sector except for the spare area. Next, the optical head mechanism 26 is positioned to the track $t_n$ which is located one track before the track $t_{n+1}$, a rotational delay time again intervenes until the first sector of the track $t_{n+1}$ comes to the position of the optical head mechanism 26, and the RAW operation is performed from the first sector to the last sector of the track $t_{n+1}$ except for the spare area. Subsequently, a sequence of the above-mentioned operations comprising a data write into a track, a positioning to the previous track, a rotational delay, an execution of the RAW operation, and a further rotational delay is repeated in the ascending order of the track addresses in the same manner as described above.

In other words, a spare area is located at the end of each track, and the RAW operation subsequent to a write operation into the next track is antecedently performed during a rotational delay associated with an access to the spare area after completion of a write operation into an arbitrary track or after completion of the RAW operation subsequent to the write operation, thereby making it possible to sequentially perform the write operation into plural tracks from the inner peripheral side to the outer peripheral side without the intervention of the useless rotational delay.

In the example shown in Figure 8, since a failure block B is detected in the track $t_{n+1}$ by the RAW operation subsequent to writing data, the data is rewritten into the spare area of the track $t_{n+1}$ immediately before data is written into the next track $t_{n+2}$. This event is expressed by a solid line in the spare area. Further, the RAW operation is performed for the data written into the spare area of the track $t_{n+1}$ immediately before the RAW operation subsequent to writing data into the track $t_{n+2}$. The RAW operation is similarly performed for the track $t_{n+2}$.

Thus, when the data write operation is sequentially performed in each track, the useless rotational delay does not occur even if a change operation is necessary to a failure block. In the present embodiment, the spare area occupies up to two blocks from the end of each track, wherein the first block is used to provide a time necessary to a determination in the RAW operation so that no data is written thereinto.

Turning back again to Figure 4, after writing the block B, it is examined whether or not the block B is the last block specified by the higher rank apparatus (step 190). If it is found that a write operation is not completed till the specified last block B, it is examined whether the track is the last one in the current recording zone (step 200). If it is found that it is not the last track in the recording zone, the procedure jumps back to the step 140 for a write operation to the next track.

If it is determined at the step 190 that the operation has been completed till the last block specified by the current command, and if it is determined that the track currently subjected to a write operation is the last track in the recording zone, it is examined whether or not data has been written into the spare block at the step 180 (step 210). If data has been written into the spare block, the optical head mechanism 26 is repositioned to the previous track (step 220), the RAW operation is performed for the data written into the spare block (step 230), and it is examined whether or not a failure block exists in the spare block (step 240). If such failure block was found, a predetermined restoring operation, not shown, is performed. If it is determined at the step 240 that the write operation into the spare block was correctly performed, or if it is determined at step 210 that data was not written into the spare block, it is again examined whether or not the write operation has been completed till the last block specified by the higher rank apparatus 1 (step 250). If the result shows that the write operation has been completed, the process executed by the command is terminated.

If it is found that the write operation has not been completed till the specified last block, that is, if there are left blocks into which data is to be written after data has been written into the last track in the current recording zone, it is further determined whether the current mode is the forward mode or not (step 260). In the case of the forward mode, the optical head mechanism 26 is positioned to the first track of the recording zone externally adjacent to the current recording zone (step 270). In the case of the backward mode, the optical head mechanism 26 is positioned to the first track of the recording zone internally adjacent to the current recording zone, as shown in Figure 1 (step 280).

In either of the forward mode and the backward mode, with respect to movement to other recording zones, the write circuit 24 and the read circuit 25 are changed over to have the operating characteristics corresponding to a change in the data transfer speed in the recording/reproducing operation. Such change-over of the operating characteristics is also effected at the steps 270 and 280.

Also, in the present embodiment, a seek time required for positioning from the last track of an arbitrary recording zone to the first track of the next recording zone in the forward mode is selected to be from a rotating time period corresponding to one or several blocks to one rotation time period at most (for example, if a track is made up of 50 - 100 blocks, the seek time is between 1/50 rotation time period and one rotation time period). In the backward mode, the seek time is set such that a seek operation is completed within a rotating time period corresponding to several blocks to 1 - 2 rotating time period at most. It should be noted that in either of the forward and backward modes the seek time is set such that an useless rotational delay does not occur.

Afterward, the procedure jumps to the step 140 where data is written into the first track of the next recording zone.

Although not particularly shown in the drawing, there may be a case where a write operation has not been completed till the specified last block at the step 190 after data was written into the spare block at the step 180, and further it is determined at the step 200 that the last track in the recording zone has not reached, so that the procedure again jumps to the step 140. On this occasion, the RAW operation subsequent to writing data to the spare block is performed immediately before the RAW operation subsequent to writing data into the next track (step 160), as shown in Figure 8.

Also, though not shown, prior to writing data into a target track, write data is received from the higher rank apparatus 1. However, this operation may be performed during positioning to the target track (step 130 and steps 270, 280) and during execution of the RAW operation (step 160) subsequent to writing data into the previous track. It is further possible to begin receiving data to be written into the next track during writing data into the target track (step 140).

As explained above, according to the information recording/reproducing method for rotary-type information recording/reproducing apparatus, the recording zones on the optical disk 2a are set and used from an area on the outer peripheral side with a higher data transfer speed, upon recording/reproducing, to an area on the inner peripheral side with a lower data transfer speed unless particularly instructed by the higher rank apparatus 1. Therefore, in an ordinary using situation where all the recording area of the optical disk 2a is relatively rarely used up, the area on the inner peripheral side, in which the data transfer speed is relatively low and an access efficiency is relatively poor, remains as unused area, which results in improving the utilizing efficiency of the optical disk 2a.

When the recording zones are set and used from the outer peripheral area to the inner peripheral area, tracks in each zone are accessed in the ascending order of the track addresses to thereby prevent useless rotational delays even in the event of an intertrack seek operation.

A seek between the recording zones is performed during a time for changing over operating characteristics of the write circuit 24, the read circuit 25 and so on, necessary for the optical head mechanism 26 to move from the recording zone to another, whereby only one or two rotations of rotational delay occurs even in a seek operation between the recording zones in the backward mode, thus making it possible to prevent the access efficiency from being deteriorated.

Also, since the identification information for identifying the forward mode or the backward mode is recorded in a portion of the recording area of the optical disk 2a, it is possible to coexist data recorded in the forward mode recording scheme and data recorded in the backward mode recording scheme in the single optical disk 2a without damaging compatibility of the optical disk 2a.

If managing information and ordinary data are recorded in the forward mode simply from an inner peripheral area to an outer peripheral area, by way of example, it is essential to provide an upper limit to a recording area for the managing information to distinguish one area from the other. In such case, at the time the recording area assigned to record the managing information is used up, an ordinary data recording area cannot be used even if there is an unused portion left therein. Such inconvenience is eliminated by the present embodiment in which managing information and ordinary data are recorded in the opposite directions to one another, as described above, i.e., one from the inner peripheral side and the other from the outer peripheral side, with the result that the whole recording area of the optical disk 2a can be more effectively used.

The invention made by the present inventor has been specifically explained based on a preferred embodiment, however, it goes without saying that the present invention is not limited to the above preferred embodiment, and various modifications can be made without departing from the spirits and scope of the invention.

For example, the recording format for recording data on a rotary-type information recording medium is not limited to the one shown in the preferred embodiment.

Also, the rotary-type information recording medium may be a magnetic disk, a magneto-optical disk or the like, apart from the optical disk.

## Claims

1. A method of recording/reproducing information on a disk-type recording medium (2a) with a plurality of tracks ($t_l$ ... $t_n$) formed thereon, comprising the steps of:
rotating the recording medium (2a) at a predetermined rotating speed, said plurality of tracks ($t_n$....$t_m$), being divided into at least two zones (#0 ... #46), each of the tracks ($t_n$....$t_m$) included in said respective zones (#0....#46) being divided into a plurality of sectors (Sector 0 ... Sector S), each of said tracks ($t_n$....$t_m$) included in a zone (#0....#46) located at the outer peripheral side having a greater number of sectors than each of said tracks ($t_n$....$t_m$) included in a zone located at the inner peripheral side;
moving a head (26) to a target zone from the outer peripheral zone to the inner peripheral zone of said recording medium (2a); and
recording information in or reproducing information from the target zone by moving the head (26) from tracks located on the inner peripheral side to tracks located on the outer peripheral side.

2. A method of recording/reproducing information according to claim 1, wherein said rotating step rotates an optical disk (2a) on which tracks ($t_l$ ... $t_n$) are spirally formed.

3. A method of recording/reproducing information according to claim 1, wherein said rotating step rotates an optical disk (2a) on which tracks ($t_l$ ... $t_n$) are concentrically formed.

4. A method of recording/reproducing information according to claim 1, wherein a recording medium (2a), in which a number of tracks ($t_l$ ... $t_n$) included in each of said plurality of zones (#0 ... #46) is identical, is rotated.

5. A method of recording/reproducing information according to claim 4, wherein a recording medium (2a), in which a number of sectors (Sector 0 ... Sector S) included in each of a plurality of tracks ($t_l$ ... $t_n$) in the same zone (#0 ... #46) is identical, is rotated.

6. A method of recording/reproducing information according to claim 5, wherein a number of sectors (Sector 0 ... Sector S) included in the tracks ($t_l$ ... $t_n$) in said plurality of zones (#0 ... #46) is increased by one from the innermost zone to the outermost zone.

7. A method of recording/reproducing information on a disk-type recording medium (2a) which is provided with a plurality of tracks ($t_l$ ... $t_n$), said tracks ($t_n$....$t_m$ divided into at least two zones (#0 ... #46), the storage capacity of each track included in zones located at the outer peripheral side being larger than the storage capacity of each track included in zones located at the inner peripheral side, said method comprising the step of:
rotating said recording (2a)
moving a head (26) on the zone on the outer peripheral side of said recording medium (2a);
positioning the head (26) to the innermost track of the positioned zone;
recording or reproducing information by sequentially moving said head (26) from the inner peripheral side to the outer peripheral side of the tracks ($t_n$....$t_m$); moving said head (26) to a zone internally adjacent to the positioned zone when recording or reproducing of information has been completed till the outermost track of the zone; and
repeating said positioning step and said recording or reproducing step.

8. A recording/reproducing method according to claim 7, wherein said rotating step includes rotating an optical disk (2a) on which tracks ($t_l$ ... $t_n$) are spirally formed.

9. A recording/reproducing method according to claim 8, wherein said recording or reproducing step includes a verifying step for verifying whether information is correctly recorded by reproducing the information after the information has been completely recorded.

10. A recording/reproducing method according to claim 9, wherein said recording or reproducing step includes a verifying step for verifying whether information is correctly recorded in tracks ($t_l$ ... $t_n$) by reproducing information recorded on a track after the information has been completely recorded on the track.

11. A recording/reproducing method according to claim 10, wherein an optical disk having a spare recording area is employed, and said recording or reproducing step includes recording information in said spare recording area if a failure recording is determined by said verification.

12. A method of recording/reproducing information on a disk-type recording medium (2a) which is provided with a plurality of tracks ($t_l$ ... $t_n$), said tracks ($t_n$....$t_m$) being divided into at least two zones (#0 ... #46), the storage capacity of each track included in the zones located at the outer periphery being larger than the storage capacity of each track included in the zones located at the inner periphery, said method comprising the steps of:

rotating said recording medium, (2a);

setting one of a first mode for sequentially selecting zones from the outer peripheral side to the inner peripheral side of said recording medium and a second mode for sequentially selecting zones from the inner peripheral side to the outer peripheral side of said recording medium;

switching said first mode or said second mode;

moving a head (26) to a predetermined zone in accordance with the switched mode; and

recording or reproducing information in each track ($t_n$...$t_m$) by sequentially moving the head (26) from tracks located on the inner peripheral side to tracks located on the outer peripheral side of the predetermined zone.

13. A recording/reproducing method according to claim 12 further comprising a step of repeating said recording or reproducing step by moving the head to the next zone (#0 ... #46) in accordance with the switched mode.

14. A recording/reproducing method according to claim 13, wherein said switching step switches between said first mode and said second mode in accordance with categories of information to be written into said recording medium.

15. A recording/reproducing method according to claim 14, wherein said switching step switches to said first mode when information requiring a high operating speed is recorded or reproduced and to said second mode when information requiring a high recording density is recorded or reproduced.

16. A recording/reproducing method according to claim 15 further comprising a step of recording a selected mode on the recording medium (2a).

17. A recording/reproducing method according to claim 13, wherein said switching step is performed by an instruction from an operator.

18. A recording/reproducing method according to claim 13 further comprising a step of mixedly setting an area in which information is recorded or reproduced in the first mode and an area in which information is recorded or reproduced in the second mode in said recording medium (2a).

19. A recording/reproducing method according to claim 18, further comprising a step of recording information corresponding to the switched mode and the set area in the recording medium (2a).

20. An apparatus for recording/reproducing information on a disk-type recording medium (2a) with a plurality of tracks ($t_l$ ... $t_n$) formed thereon, comprising:

means for rotating the recording medium (2a) at a predetermined rotating speed, said plurality of tracks ($t_l$ ... $t_n$) being divided into at least two zones (#0 ... # 46), each of the tracks ($t_l$ ... $t_n$) included in said respective zones (#0 ... #46) being divided into a plurality of sectors (Sector 0 ... Sector S), each of said tracks ($t_l$ ... $t_n$) included in a zone (#0 ... #46) located at the outer peripheral side having a greater number of sectors than each of said tracks ($t_l$ ... $t_n$) included in a zone located at the inner peripheral side;

means for moving a head (26) to a target zone from the outer peripheral zone to the inner peripheral zone of said recording medium (2a); and

means for recording information in or reproducing information from the target zone by moving the head (26) from tracks located on the inner peripheral side to tracks located on the outer peripheral side.

# F I G. I

SECTOR ADDR

TRACK ADDR

ZONE #46

SEEK OPERATION BETWEEN RECORDING ZONES

SEEK OPERATION BETWEEN RECORDING ZONES

LBN 96162

ZONE #1
(LBN 96162
~LBN 191300)

LBN 191300

ZONE #0
(LBN 0
~LBN 96161)

LBN 0

SEEK OPERATION BETWEEN RECORDING ZONES

LBN 96161

EP 0 418 858 A2

# F I G. 2A

$\left( \begin{array}{c} \text{INNER} \\ \text{PERIPHERY} \end{array} \right)$

$\left( \begin{array}{c} \text{OUTER} \\ \text{PERIPHERY} \end{array} \right)$

RECORDING ZONE #$\overline{2}$

RECORDING ZONE #$\overline{1}$

RECORDING ZONE #$\overline{0}$

# F I G. 2B

$\begin{pmatrix} \text{INNER} \\ \text{PERIPHERY} \end{pmatrix}$

RECORDING ZONE #0

RECORDING ZONE #1

RECORDING ZONE #2

RECORDING ZONE #$\overline{3}$

RECORDING ZONE #$\overline{2}$

RECORDING ZONE #$\overline{1}$

RECORDING ZONE #$\overline{0}$

$\begin{pmatrix} \text{OUTER} \\ \text{PERIPHERY} \end{pmatrix}$

# F I G. 2C

$\left(\begin{array}{c}\text{INNER} \\ \text{PERIPHERY}\end{array}\right)$

RECORDING ZONE # 0

RECORDING ZONE # 1

RECORDING ZONE # 2

RECORDING ZONE # 3

$\left(\begin{array}{c}\text{OUTER} \\ \text{PERIPHERY}\end{array}\right)$

OPERATION AFTER LOADING OPTICAL DISK

# F I G. 3A

```
        ┌───────────┐
        │   START   │
        └───────────┘
              │
              ▼                    ⌐310
  ┌─────────────────────────┐
  │ READ OUT MEDIUM MANAGING │
  │ INFORMATION              │
  └─────────────────────────┘
              │
              ▼                    ⌐320
     YES ◇ UNUSED MEDIUM ? ◇
              │ NO
              ▼                    ⌐330
         ◇ COMBINED MODE ? ◇ ─── NO
              │ YES       ⌐340
  ┌─────────────────────────┐
  │ MEDIUM MODE = COMBINED MODE │
  └─────────────────────────┘
```

```
                    ⌐350
     ◇ BACKWARD MODE ? ◇ ── NO
              │ YES    ⌐360
  ┌─────────────────────────┐
  │ MEDIUM MODE = BACKWARD MODE │
  └─────────────────────────┘

       370
  ┌─────────────────────────┐
  │ MEDIUM MODE = FORWARD MODE │
  └─────────────────────────┘
```

```
        ┌───────────┐
        │    END    │
        └───────────┘
              ┆
              ▼
      COMMAND WAITING
```

EP 0 418 858 A2

OPERATION AFTER RECEIVING COMMAND

F I G. 3B

```
                    ┌──────────────┐
                    │    START     │
                    └──────┬───────┘
                           │           110a
                    ╱──────────────╲         NO
                   ╱  UNUSED MEDIUM ? ╲──────────────────────────────────┐
                   ╲                  ╱                                    │
                    ╲────────┬───────╱                                    │
                         YES │ ◄──────────────────────┐                   │
                           110b                        │          110g    │
           NO     ╱──────────────╲                 YES │  ╱──────────────╲ │
         ┌───────╱  FORWARD MODE   ╲                   └─╱ MEDIUM MODE =   ╲◄┘
         │       ╲   INDICATED ?   ╱                    ╲ COMBINED MODE ?  ╱
         │        ╲────────┬───────╱                     ╲───────┬────────╱
         │             YES │   110c                          NO │   110h
         │       ┌──────────────────────┐          YES  ╱──────────────╲
         │       │ OPERATING MODE & MEDIUM│        ┌────╱  IS MEDIUM MODE  ╲
         │       │ MODE = FORWARD MODE    │        │    ╲  COINCIDENT WITH  ╱
         │       └───────────┬───────────┘        │     ╲OPERATING MODE ? ╱
         │                   │    110d            │      ╲──────┬───────╱
         │       ┌──────────────────────┐         │          NO │   110j
         │       │ OPERATING MODE & MEDIUM│        │    ╱──────────────╲    NO    END WITH
         │       │ MODE = BACKWARD MODE   │        │   ╱  IS WRITE       ╲───────► ERROR
         │       └───────────┬───────────┘        │   ╲  INSTRUCTED ?   ╱
         │                   │ ◄──────────────────┘    ╲──────┬───────╱
         │             110e  │                             YES │    110k
         │   NO  ╱──────────────╲                    ╱──────────────╲   NO
         └──────╱ MEDIUM MODE CHANGED ╲             ╱  IS FORWARD MODE ╲────────┐
                ╲        ?          ╱             ╲   INDICATED ?    ╱          │
                 ╲────────┬───────╱                 ╲───────┬───────╱           │
                      YES │   110f                      YES │   110m           │
            ┌──────────────────────┐          ┌────────────────────────────┐   │
            │ WRITE MEDIUM MANAGING │          │ OPERATING MODE = FORWARD MODE│  │
            │ INFORMATION           │          │ MEDIUM MODE = COMBINED MODE │   │
            └───────────┬───────────┘          └──────────────┬─────────────┘   │
                        │ ◄───────────                        │                 │
                ┌───────┴──────┐                 ┌────────────────────────────┐ │
                │     END      │                 │ OPERATING MODE = BACKWARD MODE│◄┘  110n
                └──────────────┘                 │ MEDIUM MODE = COMBINED MODE │
                                                 └────────────────────────────┘
```

EP 0 418 858 A2

# F I G. 4A

START

COMMAND & PARAMETER RECEIVED ～110
·WRITE / READ
·FIRST BLOCK ADDRESS ( LBN )
·NUMBER OF OPERATED BLOCKS
·FORWARD / BACKWARD MODE

WRITE OPERATION ? ～120 → NO →

YES

POSITIONING TO TRACK INCLUDING SPECIFIED FIRST BLOCK ～130

B →

WRITE DATA INTO TARGET TRACK ～140

REPOSITION ONE TRACK BEFORE ～150

READ AND CHECK DATA WRITTEN INTO TARGET TRACK ～160

DOES FAILURE BLOCK EXIST ? ～170 → NO

YES ～180

WRITE DATA INTO SPARE BLOCK

TERMINATED UNTILL SPECIFIED LAST BLOCK ? ～190 → YES

NO

NO ← LAST TRACK IN RECORDING TRACK ? ～200

YES

A

17

# F I G. 4B

A

WAS DATA
WRITTEN INTO SPARE BLOCK
AT 180 ?  ⌒210

NO ◀

YES

REPOSITION ONE TRACK BEFORE  ⌒220

READ AND CHECK DATA
WRITTEN INTO SPARE BLOCK  ⌒230

DOES FAILURE
BLOCK EXIST ?  ⌒240    YES   TO NEXT RESTORING
OPERATION (OMITTED)

NO

TERMINATED
UNTILL SPECIFIED LAST
BLOCK ?  ⌒250    YES

NO

FORWARD ACCESS MODE ?  ⌒260

NO

YES

POSITION TO FIRST TRACK OF
NEXT RECORDING ZONE
(FORWARD MODE)  ⌒270

POSITION TO FIRST TRACK OF
NEXT RECORDING ZONE
(BACKWARD MODE)  ⌒280

B

END

18

# F I G. 5

SECTOR$_S$

SECTOR$_{S-1}$

SECTOR$_0$

SECTOR$_1$

BROCK B

TRACK tn +1

TRACK tn

TRACK tn -1

# F I G. 6

SECTOR$_1$

SECTOR$_0$  SECTOR$_2$

SECTOR$_{S-2}$  SECTOR$_S$

SECTOR$_{S-3}$  SECTOR$_{S-1}$

TRACK tn

BLOCK B

ID FIELD    DATA FIELD

# FIG. 7

```
                    ┌──────────────────────────────┐
                    │  HIGHER  RANK  APPARATUS      │──1
                    │ (CHANNEL, HOST COMPUTER)      │
                    └──────────────────────────────┘
                                                        2
         ┌──────────────────────────────────────────────────────┐
         │         ┌──────────────────────────────┐              │
         │         │    INTERFACE  CONTROLLER      │──21          │
         │         └──────────────────────────────┘              │
         │                        33    22        23             │
         │  29a      27          32                              │
         │ ┌──────┐ ┌──────┐            ┌──────────┐ ┌─────────┐  │
         │ │BUFFER│ │      │            │  MICRO-  │ │ CONTROL │  │
         │ │MEMORY│ │      │            │PROCESSOR │ │ MEMORY  │  │
         │ └──────┘ │SELEC-│            └──────────┘ └─────────┘  │
         │ ┌──────┐ │ TOR  │                                     │
         │ │BUFFER│ │      │   30                                │
         │ │MEMORY│ │      │                                     │
         │ └──────┘ └──────┘                                     │
         │  29b       31                                         │
         │        ┌────────────┐    ┌──────────────┐             │
         │  25─── │READ CIRCUIT│    │ WRITE CIRCUIT│───24        │
         │        └────────────┘    └──────────────┘             │
         │                                                       │
         │                          ┌──────────────┐            │
         │                          │OPTICAL HEAD  │──28         │
         │                          │CIRCUIT       │            │
         │                          └──────────────┘            │
         └───────────────────────────────────────────────────────┘
```

OPTICAL HEAD CIRCUIT —28

26 —

DRIVER

34

—26a

2a

# F I G. 8

T : ROTATING CYCLE OF MEDIUM